Europäisches Patentamt

European Patent Office

Office européen des brevets

(19)

(11) Veröffentlichungsnummer : **0 060 460**
**B1**

(12) **EUROPÄISCHE PATENTSCHRIFT**

(45) Veröffentlichungstag der Patentschrift :
13.03.85

(21) Anmeldenummer : 82101727.4

(22) Anmeldetag : 05.03.82

(51) Int. Cl.⁴ : **B 22 C 1/00, B 22 C 9/06, B 22 D 15/00, C 04 B 33/24, C 04 B 35/18**

(54) Verfahren und Form für das Metallgiessen.

(30) Priorität : 16.03.81 US 244110

(43) Veröffentlichungstag der Anmeldung :
22.09.82 Patentblatt 82/38

(45) Bekanntmachung des Hinweises auf die Patenterteilung : 13.03.85 Patentblatt 85/11

(84) Benannte Vertragsstaaten :
AT BE CH DE FR GB IT LI LU NL SE

(56) Entgegenhaltungen :
DE-A- 2 113 301
DE-B- 2 451 744
DE-B- 2 700 517
Chemical Abstracts Band 79, Nr. 10, 10. September 1973 Columbus, Ohio, USA A.N. TSIBRIK et al. "Composition for foundry molds and cores" Seite 225, Spalte 2, Zusammenfassung 56729t

(73) Patentinhaber : ABEX CORPORATION
Six Landmark Square P.O. Box 10268
Stamford, Connecticut 06904-2268 (US)

(72) Erfinder : Beetle, Robert H.
344 Morris Avenue
Mountain Lakes New Jersey 07046 (US)

(74) Vertreter : Wilcken, Thomas, Dipl.-Ing. et al
Musterbahn 1
D-2400 Lübeck (DE)

EP 0 060 460 B1

## Beschreibung

Die Erfindung betrifft gemäß Oberbegriff von Anspruch 1 ein Gießereiverfahren bzw. nach dem Oberbegriff von Anspruch 4 eine Dauerform zum Gießen von Metall. Der jeweils gattungsbestimmende Stand der Technik ist mit der DE-A-2 113 301 gegeben. Gemäß deren Seite 6 Absatz 2 bzw. deren Anspruch 2 wird ein Gemisch aus Spodumen, einem weiteren keramischen Werkstoff und einem Binder verwendet, wobei ein Spodumengehalt von 90 Gewichtsprozent nicht überschritten wird. Im Gebrauchszustand liegt also eine dreiphasige Gefügezusammensetzung vor, die bei Dauerformen für das Metallgießen noch mit Nachteilen verbunden ist.

Weiter sind Sandformen für das Metallgießen im Einsatz. Der allgemeine Aufbau einer Gießereiform besteht aus Sand, der um ein Modell herum gestampft wird, und aus dem das Modell abstützenden Formkasten. Das Modell wird wieder entfernt, wodurch ein Formhohlraum entsteht, der die Negativgestalt des Modells darstellt. Der Formsand wird vorher gewöhnlich mit einem Öl oder einem Binder gemischt, um zu sichern, daß die Sandpartikel zusammenbacken bzw. zusammengehalten werden. Es können Sandkerne in dem Formhohlraum verwendet werden, um für Hohlräume in dem Sandgußstück zu sorgen. Zusätzlich bilden der Formsand und der Formkasten eine Wärmesenke bzw. ein Wärmeableitungsmittel, wodurch Wärme von dem in der Form erstarrenden Metall abgeleitet wird.

Die normale Sandform wird nach Entfernung des Gußstückes zerstört, wenn dieses erstarrt ist. Dies bedeutet zumindest einen Zeitverlust, und wenn es vom Standpunkt der Kosten und Produktivität vertretbar ist, wird der Gießereifachmann eine Dauerform wählen, d. h. eine Form, die wiederholt verwendet werden kann, bis sie verschlissen ist. Für diesen Zweck kann Graphit verwendet werden ; doch da Graphit bei höheren Temperaturen, wie sie in der Gießerei anzutreffen sind, oxydiert, ist es nötig, auf eines von mehreren Verfahren zurückzugreifen, um die Graphitform gegen Oxydation zu schützen und/oder um die Karburisierung des Gußstückes aufgrund des Kontaktes mit dem Graphit zu vermeiden.

Dauerformen können aus Kupferlegierungen bestehen, die normalerweise mit Wasser gekühlt werden, insbesondere wenn Eisenmetalle vergossen werden. Gewisse Eisenmetalle und Stähle mit hohem Schmelzpunkt können spangebend bearbeitet werden, um einen Formhohlraum zu bilden. Sie müssen ebenso wie Kupferformen in üblicher Weise gekühlt werden, so daß die Innentemperatur der Metallform nicht einen Punkt erreicht, an dem die Form beschädigt wird.

Idealerweise sollte die Wärme so schnell wie möglich von der Form und dem Gußstück abgeleitet werden, wie es in Übereinstimmung und der Art der in dem Gußstück gewünschten Mikrostruktur vereinbar ist. Jedoch erzeugt ein starker Gradient (heiße Innenwandungsfläche, kalte Außenwandungsfläche) eine Wärmespannung in der Formwand, der durch die Streckgrenze des die Dauerform bildenden Materials widerstanden werden muß. Wiederholte thermische Zyklen dieses Typs bzw. dieser Beanspruchung (Wärmeermüdung) stellen eine allgemeine Quelle des Versagens bei (metallenen) Dauerformen dar.

In Verbindung mit dem Vorstehenden ist ebenfalls anzuführen, daß allgemein für Sandformen verwendete Binder bei der Gießtemperatur des Gußstückes vergasen und häufig Oberflächenmängel verursachen, wenn nicht sogar Mängel innerhalb des Gußstückes.

Von der DE-A-2 113 301 ausgehend besteht die Aufgabe des vorliegenden Anmeldungsgegenstandes in der Schaffung eines Verfahrens und einer Dauerform aus Glaskeramik für das Metallgießen, wobei das Verfahren eine hohe Produktionsrate erlaubt und wobei die Dauerform hinsichtlich der thermischen Schockeigenschaften und der thermischen Dauerfestigkeit verbessert ist und eine steuerbare Ableitung der Gießmetallwärme gestattet.

Diese Aufgabe ist mit den Merkmalen des Anspruches 1 (Gießereiverfahren) bzw. mit den Merkmalen des Anspruches 4 (Dauerform zum Gießen von Metall) gelöst.

Mit einer derartigen Form ist es möglich, das Metall in einer Weise zu erstarren, daß die Form gegen lokale Überhitzung geschützt ist, während der Wärmefluß bei einem Wert vonstatten geht, der in dem vergossenen Metall die angemessene oder gewünschte Struktur bzw. Gefüge, Güte und die gewünschten mechanischen Eigenschaften entwickelt. Es ist beim praktischen Gebrauch der Erfindung beispielsweise festgestellt worden, daß 3 % Phosphoreisen, das heutzutage allgemein für Schienenbremsschuhe bzw. -backen verwendet wird, in der erfindungsgemäßen Form schnell genug abgekühlt werden kann, um die glaskeramische Form zu schützen und trotzdem die Festigkeit oder Zähigkeit des Eisens innerhalb der gewünschten Grenzen zu erhalten. Die Parameter für das Wärmegleichgewicht können durch die Wahl eines Formschlichte materials, des spezifischen glaskeramischen Materials und des externen Kühlungsmediums verändert werden.

Die Natur des Wärmeaustausches wird eine schnelle Wiederverwendung der Form zwecks hoher Produktivitätsraten erlauben, die es vielleicht gestatten, beispielsweise 12 Schienenbremsschuhe mit einer Form pro Stunde herzustellen, und zwar durch Wiederverwendung der glaskeramischen Form.

Es scheint hinsichtlich der Art der Glaskeramik zum Zweck der Aufnahme eines geschmolzenen Metallgußstückes keine Grenze zu bestehen, solange die Mikrostruktur bzw. das Mikrogefüge als polykristalline Keramik vorherrscht. In den meisten Fällen einer Glaskeramik, die zu annehmbaren Kosten für Gießereizwecke im Handel erhältlich ist, wird ein Rest einer Glasphase (1 oder 2 %) vorhanden sein, die eine Zusammensetzung aus Keramik und Glas vervollständigt. Dies bedeutet nicht notwendigerweise, daß 100 % kristallines Gefüge für den vorliegenden Zweck nicht geeignet ist.

Die Gießereiform kann durch jedes konventionelle Glasherstellverfahren hergestellt werden. Die hergestellte Form wird dann wärmebehandelt, um die gewünschte Glaskeramik nach der allgemeinsten Methode zu erzeugen. Diese Behandlung sind allgemein bekannt, so daß sie hier nicht weiter erläutert sind. Kurz zusammengefaßt besteht das Material aus einer vorherrschend mikrokristallinen Keramik, die aus einem ursprünglichen, glasigen Zustand durch gesteuerte Kristallkernbildung und Entglasung hergestellt ist.

Das am meisten bevorzugte Material für die vorliegenden Zwecke, wie es auf der Basis der tatsächlichen Gießereipraxis bestimmt worden ist, besteht aus Glaskeramik vom Typ Corning 9608, bei der bzw. bei dem die kristalline Phase aus Spodumen besteht. Das dann bevorzugte Material der gleichen Basis ist Glaskeramik vom Typ Corning 9606, bei der bzw. bei dem die mikrokristalline Phase aus Dichroit besteht. Diese beiden Materialien haben einen niedrigen Wärmeausdehnungskoeffizienten.

Im Folgenden ist ein Ausführungsbeispiel der Erfindung beschrieben, nach dem ein Eisengußstück in einer glaskeramischen Form vergossen ist.

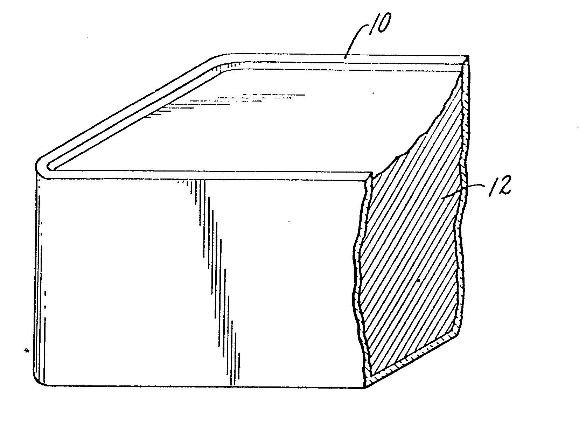

Mehrere Kilogramm Gußeisen wurden bei 1 200 bis 1 260 °C (2 200-2 300 °F) in einen Formhohlraum gegossen, der einen Abschnitt oder einen Teil eines gußeisernen Schienenbremsschuhs bildete, der in der Zeichnung dargestellt ist. Der rechteckige Formhohlraum 10 wurde durch eine Glaskeramik (Corning 9608 Pyroceram) gebildet, die eine gleichmäßige Dicke aufwies, und zwar etwa 4,6 mm dick an den vier Seitenwänden und etwa 3,8 mm dick an der Bodenwandung, wobei die Form selbst insgesamt aus einem Teil bestand.

Um übermäßig heiße lokale Stellen zu vermeiden, wurde eine dünne Formschlichte auf Zirkonbasis auf der Innenfläche der Form angebracht, was eine konventionelle Gießereipraxis darstellt und unter den hier vorliegenden Bedingungen vorgezogen wird.

Das entstandene Eisengußstück 12 war fehlerfrei in jeder Beziehung und wies und Oberflächenaussehen auf, das sowohl einem Sandgußstück als auch einem einmaligen Abguß in einer Stahldauerform überlegen war. Dieselbe Form 10 wurde für zwei zusätzliche Gießvorgänge mit Eisen unter Anwendung eines Schlichteanstriches verwendet. Die Form überstand die beiden zusätzlichen Gießvorgänge und überstand weiterhin neunzehn folgende Gießvorgänge mit Eisen mit 3 % Phosphor, das bei 1 200 bis 1 260 °C (2 200-2 300 °F) vergossen wurde. Der Formüberzug bzw. die Schlichte (auf Zirkonbasis) wurde vor jedem neuen Gießvorgang erneuert.

Wenn das Eisen vergossen wird, kann die Form in einen Formkasten mit Stahlkügelchen von kleinem Durchmesser gesetzt werden, mit welchen die Form bis zum Rand gefüllt ist. Durch Vorsehen einer Rinne oder eines Grabens um den Seitenumfang der Form herum, um das Äußere der Form nach dem Vergießen des Eisens freizulegen, kann beobachtet werden, daß die Form schnell eine schwach kirschrote Farbe erlangt. Die Wärmeableitung durch die Formwand in die umgebende Wärmesenke aus Stahlkügelchen wirkt schnell, und zwar wegen der außergewöhnlich dünnen Formwand für so ein großes Gußstück, wobei die Wärmeleitung durch Strahlung unterstützt wird.

Aus der zusätzlichen Experimentierarbeit ist es ersichtlich bzw. ergibt es sich, daß die Lebensdauer der Form erhöht wird, wenn eine Formschlichte verwendet wird, wie es bevorzugt wird. Ebenso kann das besondere Wärmesenkmedium bzw. Wärmekühlmedium, z. B. Kügelchen, Sand, Ton usw., teilhaben am Wärmefluß, während es als hinterlegtes Futter oder Mantel wirkt, um die Formwand gegen das Moment des schweren und schnellen Gießstrahles aus geschmolzenem Metall aus einer oberhalb befindlichen Gießpfanne zu stützen. In Verbindung mit dem Vorstehenden sei angeführt, daß eine glaskeramische Form, die Wärme schnell überträgt, einen großen Umfang an Trennschärfe ermöglicht, der hinsichtlich der Abkühlzeiten Verwendung findet, die oft hinsichtlich der Steuerung der Basismetallumbildung sehr wichtig ist. Wenn daher die Formschlichte dick aufgetragen ist und die glaskeramische Form lediglich in der Umgebungsluft abkühlen kann, wird die Erstarrung des Gußstückes verzögert sein im Vergleich zu der Situation, bei der ein dünner Formschlichteauftrag entlang der besonderen Wärmesenke verwendet wird, welch letztere einen hohen Wärmeleitungskoeffizienten aufweist.

Dieses Merkmal der Trennschärfe steht im Vergleich zu bekannten Dauerformen, bei denen die Notwendigkeit, die Form durch Wasser oder andere Mittel zum Schutz der Form zu kühlen, sich manchmal selbstzerstörend auswirkt, indem das Gußstück einer nachteiligen Abkühlung unterworfen ist ; das Gußstück wird zu hart oder spröde und/oder die Form verzieht sich beispielsweise.

Es bestehen ebenfalls Anzeichen, daß Dauerhaftigkeit der Form im Sinne der Widerstandsfähigkeit hinsichtlich wiederholter Abgüsse bei hohen Temperaturen auf der Dünnheit der Formwände beruht, die etwa 5 mm nicht überschreitet.

Zusammengefaßt kann folgendes festgestellt werden. Aus den vorstehenden Ausführungen ist ersichtlich, daß die Praxis bei Anwendung der vorliegenden Erfindung bei vielen Gießereiproblemen eine Lösung erfährt. Die glaskeramische Form kann bei sehr viel höheren Temperaturen verwendet werden als gegenwärtig benutzte Dauerformen und sie zeigt geringe thermische Expansion und Kontraktion, große Widerstandfähigkeit gegen thermische Schockbeanspruchung und ist frei von Oxydation, Bruchanfälligkeit und Werfungsproblemen, wie sie bei gegenwärtig verwendeten Dauerformmaterialien auftreten. Die Glaskeramik überträgt bevorzugt (und ist durchlässig für) Infrarotstrahlung, um die notwendige Wärmeableitung zu unterstützen. Die Beschaffenheit der Form bei Benutzung bei hohen Temperaturen erlaubt die Nutzung für Wärmeübertragung auf neuen Wegen im Vergleich zur laufenden Praxis bei Dauerformen.

Ein bevorzugtes polykristallines Material auf Basis der vorliegenden Arbeit ist Spodumen, $LiO_2 \cdot Al_2O_3 \cdot 4 SiO_2$ ; es gibt jedoch gleichwertige Glaskeramiken, die ebenfalls für Gießereiformen geeignet sind, einschließlich einer solchen, bei der die polykristalline Phase (Keramikphase) aus Dichroit besteht : $2 MgO \cdot 2 Al_2O_3 \cdot 5 SiO_2$.

Somit ergibt sich, daß Dauerformen aus Metall oder Graphit in der Regel entweder eine äußere Abkühlung oder eine große Kühlmasse für einen erfolgreichen Betrieb erfordern. Dies ist ein Unterschied, der solche Dauerformen von der dünnwandigen glaskeramischen Form nach der Erfindung unterscheidet, die eine geeignete Wärmewiderstandsfähigkeit aufweist, um bei höheren Temperaturen betrieben werden zu können, und doch nicht eine äußere Kühlung oder einen größeren Wandquerschnitt bzw. eine größere Wanddicke erfordert. Ebenso fördert das dünnwandige Merkmal die Fähigkeit der Form, thermischer Schockbeanspruchung zu widerstehen, da die inneren und äußeren Formwandoberflächen auch im Temperaturwert näher beieinanderliegen.

## Ansprüche

1. Gießereiverfahren, bei dem geschmolzenes Metall in eine Dauerform gegossen wird, deren metallbegrenzende Wände aus einem im wesentlichen gleichmäßig zusammengesetzten Glaskeramikmaterial bestehen, wobei die vorherrschende Mikrostruktur dieses Materials von polykristalliner Keramik besteht, die durch Versteinung aus dem glasigen Zustand umgewandelt ist, dadurch gekennzeichnet, daß die genannte polykristalline Keramik eine einphasige Mikrostruktur aufweist, daß die Formwände für Infrarotstrahlung durchlässig sind und daß die Ableitung der Hitze des Gußstückes durch Abstrahlung unterstützt wird, wobei die Forminnenfläche mit einem Schlichteanstrich versehen wird.

2. Verfahren nach Anspruch 1, dadurch gekennzeichnet, daß die Formwand der Dauerform außenseitig in eine besondere Wärmesenke eingetaucht wird, daß die die Wärmesenke bildenden Partikel eine Wärmeleitfähigkeit aufweisen, die nach den Bedingungen des Wärmedurchgangs durch die Formwände zwecks genauer Steuerung der Wärmeableitung vom Gußstück ausgewählt sind, und daß die Forminnenfläche mit einem Schlichteanstrich versehen wird.

3. Verfahren nach Anspruch 1 oder 2, dadurch gekennzeichnet, daß die Glaskeramik aus Spodumen besteht.

4. Dauerform zum Gießen von Metall, deren das Gießmetall haltende Formwände den Formhohlraum umschließen und aus einem im wesentlichen gleichmäßig zusammengesetzten Glaskeramikmaterial bestehen, wobei die vorherrschende Mikrostruktur aus polykristalliner Keramik besteht, die durch Versteinung aus dem glasigen Zustand entstanden ist, dadurch gekennzeichnet, daß die genannte polykristalline Keramik eine einphasige Mikrostruktur aufweist und daß die Forminnenfläche mit einem Schlichteanstrich versehen ist.

5. Dauerform nach Anspruch 4, dadurch gekennzeichnet, daß das Keramikmaterial aus Spodumen oder Dichroit besteht.

6. Dauerform nach Anspruch 4, dadurch gekennzeichnet, daß sie von einer besonderen Wärmesenke umgeben ist.

## Claims

1. A foundry method comprising the step of casting molten metal into a permanent mold the metal-confining walls of which consist of a glass ceramic material composed substantially uniformly, the predominant microstructure of said material is a polycrystalline ceramic converted by devitrification from the glassy state, characterized in that said polycrystalline ceramic is of a single-phase microstructure, that the walls of the mold are transparent to infrared radiation, and that the dissipation of the heat of the casting is supported by radiation, whereby the interior surface of said mold is to be provided with a mold wash.

2. A method according to claim 1 characterized in that the mold wall of the permanent mold on the outside is submerged into a particulate heat sink, that the particles forming the heat sink have a heat conductivity which is selected upon the conditions of the heat transfer through the walls of the mold in order to exactly control the heat dissipation from the casting, and that the interior surface of the mold is to be provided with a mold wash.

3. A method according to claim 1 or 2 characterized in that said glass ceramic is spodumene.

4. A permanent mold for casting molten metal the molten metal-confining walls thereof surround the mold cavity and consist of a glass ceramic material, the predominant microstructure of which is polycrystalline ceramic which is formed by devitrification from a glassy state, characterized in that said polycrystalline ceramic has a single-phase microstructure and that the interior mold surface is provided with a mold wash.

5. A permanent mold according to claim 4 characterized in that said ceramic material is spodumene or cordierite.

6. A permanent mold according to claim 4 characterized in that said mold is surrounded by a particulate heat sink.

## Revendications

1. Procédé de fonderie, par lequel le métal en fusion est coulé dans un moule permanent, dont les parois qui viennent en contact avec le métal en fusion, se composent d'une matière céramique vitreuse de composition pratiquement homogène, dont la microstructure prédominante est celle d'une matière céramique polycristalline, formée par pétrification à partir de l'état vitreux, caractérisé en ce que ladite matière céramique polycristalline a une structure monophasique, les parois du moule sont transparentes pour la radiation infrarouge et l'évacuation de la chaleur de la pièce coulée est accélérée par rayonnement thermique, la surface intérieure du moule étant rendue lisse par revêtement au moyen d'une couche spéciale, choisie à cet effet.

2. Procédé selon la revendication 1, caractérisé en ce que la paroi de façonnage dudit moule permanent est, à l'extérieur, introduite dans un dispositif d'absorption de chaleur spécial, dont les particules susceptibles d'absorber la chaleur ont une conductibilité thermique choisie en fonction des conditions de passage de la chaleur par les parois du moule en vue d'un réglage précis et efficace de l'évacuation de la chaleur en provenance de la pièce coulée, et en ce que la surface intérieure du moule est rendue lisse par revêtement au moyen d'une couche spéciale, choisie à cet effet.

3. Procédé selon la revendication 1 ou 2, caractérisé en ce que ladite matière céramique vitreuse se compose de « spodumen ».

4. Moule permanent pour la coulée de métal en fusion, dont les parois venant en contact avec le métal en fusion enveloppent l'espace creux du moule et se composent d'une matière céramique vitreuse de composition pratiquement homogène, dont la microstructure prédominante. est celle d'une matière céramique polycristalline, formée par pétrification à partir de l'état vitreux, caractérisé en ce que ladite matière céramique polycristalline accuse une microstructure monophasique et la surface intérieure du moule est rendue lisse par revêtement au moyen d'une couche de composition spéciale, choisie à cet effet.

5. Moule permanent selon la revendication 4, caractérisé en ce que ladite matière céramique se compose de « spodumen » ou de dichroite.

6. Moule permanent selon la revendication 4, caractérisé en ce qu'il est enveloppé d'un dispositif d'absorption de chaleur spécial, choisi à cet effet.